# EUROPEAN PATENT APPLICATION

(11) **EP 0 545 622 A1**
(43) Date of publication of application: **09.06.1993**
(21) Application number: 92310780.9
(22) Date of filing: 25.11.1992
(51) Int. Cl.: H01B 7/18, G02B 6/44

(54) **Communication cable**

(30) Priority: 29.11.1991 GB 9125417
(71) Applicant: BICC Public Limited Company, London W1X 5FH (GB)
(72) Inventor: Hodge, Kenneth George, Handbridge, Chester, CH4 7HR (GB)
(74) Representative: Dlugosz, Anthony Charles

(57) **Abstract**

A communication cable which is suitable for use in installations in which it may be subjected to extremes of weather conditions and which can be readily modified for use in buildings comprises at least one conductor 1 for carrying communication signals and a composite overall sheath 3 comprising an inner sheath 4 of a flame-retardant material (preferably a low-smoke-and-fume flame-retardant material) and an outer sheath 6 of a weather-resistant material, the outer sheath being readily removable from the inner sheath without any detrimental effect thereon. The communication cable may constitute one lobe of a drop cable of 8-shaped transverse cross-section, the other lobe of the drop cable comprising a flexible elongate reinforcing member enclosed within a sheath of weather-resistant material integral with the weather-resistant material of the outer sheath of the communication cable.

## Description

This invention relates to communication cables comprising at least one conductor along which communication signals can be transmitted. The invention is concerned with communication cables in which the or each signal-carrying conductor is of metal or metal alloy, with communication cables in which the or each signal-carrying conductor comprises an optical fibre and with communication cables in which at least one signal-carrying conductor is of metal or metal alloy and at least one signal-carrying conductor comprises an optical fibre. It is, therefore, to be clearly understood that the generic term "conductor" as used in this specification includes both metallic conductors for carrying electric signals and optical fibres for carrying light signals.

Where a communication cable is to be installed at locations in which it will be exposed to extremes of weather conditions, it is the general practice to provide the cable with an overall sheath of a material which is, and which hereinafter will be referred to as, weather-resistant. Where a communication cable is to be installed in a domestic, commercial or industrial building, there is a demand for the cable to have an overall sheath of a material which, under fire conditions, will contribute as little as possible to the spread of flame (flame retardant) and will protect the cable for a time sufficient for the cable to continue to transmit communication signals that may be necessary to ensure rapid and safe evacuation of the building and/or control of fire fighting equipment, such a material hereinafter being referred to as "a flame-retardant material"; there is an increasing demand for the cable to have an overall sheath of an especial flame-retardant material which, under fire conditions, will also contribute as little as possible to the generation of obscuring smoke and hazardous fumes (low smoke and fume) and such an especial flame-retardant material hereinafter will be referred to as "a low-smoke-and-fume flame-retardant material".

Since a communication cable having an overall sheath of weather-resistant material and feeding a domestic, commercial or industrial building differs in construction from a communication cable installed within the building and having an overall sheath of a flame-retardant material, it is necessary to effect, at a position where a communication link is to enter a building, a joint or joints between the conductor or conductors of the communication cable with the overall sheath of weather-resistant material and the conductor or conductors of the communication cable with the overall sheath of a flame-retardant material. Such a cable joint is time consuming and expensive, especially in the case where the or each conductor of both communication cables comprises an optical fibre or in the case where the or each conductor of one of the communication cables comprises an optical fibre and the or each conductor of the other communication cable is of metal or metal alloy.

It is an object of the present invention to provide an improved communication cable which is suitable for use in installations in which it may be subjected to extremes of weather conditions and which can be readily modified for use in domestic, commercial or industrial buildings.

According to the invention, the improved communication cable comprises at least one conductor for carrying communication signals and a composite overall sheath comprising an inner sheath of a flame-retardant material and an outer sheath of a weather-resistant material, the outer sheath being readily removable from the inner sheath without any detrimental effect thereon.

Preferably, the weather-resistant material of the outer sheath and the flame-retardant material of the inner sheath are so selected having regard to one another that there will be substantially no bond between the inner and outer sheaths when the outer sheath is applied over the inner sheath. By way of example, in a preferred communication cable the inner sheath is made of polyvinyl chloride and the outer sheath is made of polyethylene. Alternatively, or additionally, the inner and outer sheaths of the composite overall sheath may be separated by a layer of material which will not readily bond to the flame-retardant material of the inner sheath, or to the flame-retardant material of the inner sheath and to the weather-resistant material of the outer sheath, such a material hereinafter being referred to as "a bond-resistant material". This layer of bond-resistant material may be a coating of chalk or a layer of tape of paper or a plastics material such as an oriented polyester.

Where the flame-retardant material of the inner sheath is a low-smoke-and-fume flame-retardant material, we prefer to employ, as the low-smoke-and-fume flame-retardant material of the inner sheath, ethylene vinyl acetate or a polyester thermoplastics elastomer.

If desired, a separately formed layer of metallic or non-metallic elongate elements of reinforcing material may be sandwiched between the inner and outer sheaths, or between said layer of bond-resistant material and the outer sheath, and be readily removable from the inner sheath, or from said layer of bond-resistant material, after the outer sheath has been removed, without any detrimental effect on the flame-retardant properties of the inner sheath.

Removal of the outer sheath from the inner sheath may be further facilitated by incorporation in the radially inner part of the outer sheath throughout its length of at least one rip cord.

In some circumstances, the improved communication cable of the present invention may constitute one lobe of a drop cable of substantially 8-shaped transverse cross-section, the other lobe of the drop cable comprising a flexible elongate member of metallic or non-metallic reinforcing material enclosed within a sheath of weather-resistant material integral with the weather-resistant material of the outer sheath of the improved communication cable.

As previously indicated, the or each signal-carrying conductor of the improved communication cable may be an electric conductor of metal or metal alloy or it may comprise an optical fibre. Where the or a signal-carrying conductor is an optical fibre, the optical fibre may be so loosely housed in a bore extending throughout the length of the improved communication cable that the optical fibre is capable of limited transverse movement with respect to the cable when the cable is flexed.

The improved communication cable of the present invention has the important advantage that no cable joint has to be effected at the position where the cable passes through a hole in the wall of a building into the interior thereof. All that is required is to ensure that a fluid-impermeable seal is provided at the position where the cable passes from the exterior to the interior of the building. The outer sheath of weather-resistant material will be removed from that part of the improved communication cable within the building.

A further advantage arising from the invention lies in the fact that a cable manufacturer can manufacture as a standard product a communication cable comprising at least one conductor for carrying communication signals and a sheath of a flame-retardant material and, when an improved communication cable of the present invention is required, can provide this standard product with an outer sheath of a weather-resistant material as hereinbefore described.

The invention also includes a communication cable installation wherein a communication cable comprising at least one conductor for carrying communication signals and a composite overall sheath comprising an inner sheath of a flame-retardant material and an outer sheath of a weather-resistant material, the outer sheath being readily movable from the inner sheath without any detrimental effect thereon, extends to the exterior of a wall of a building and effects a substantially fluid-tight seal with, and passes through a hole in, said wall into the interior of the building, the outer sheath of weather-resistant material having been removed from that part of the communication cable extending within the building.

The invention is further illustrated by a description, by way of example, of two preferred forms of communication cable with reference to the accompanying drawing, in which:-
Figure 1 is a transverse cross-sectional view of the first preferred form of communication cable drawn on an enlarged scale, and
Figure 2 is a transverse cross-sectional view of a preferred communication drop cable drawn on an enlarged scale.

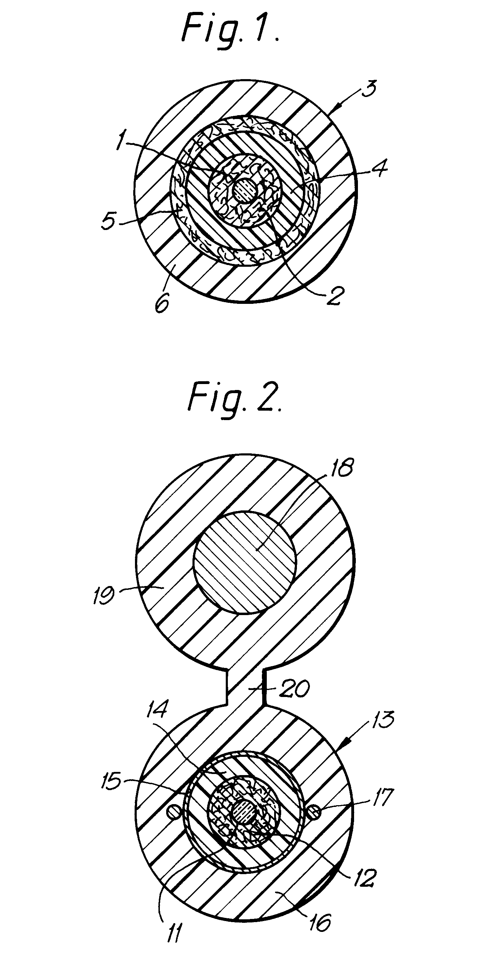

Referring to Figure 1, the first preferred form of communication cable comprises a single optical fibre 1 encapsulated in aramid yarns 2 and, surrounding the encapsulated optical fibre, a composite sheath 3 consisting of a flame-retardant inner sheath 4 of polyvinyl chloride, a layer 5 of elongate elements of non-metallic reinforcing material overlying the inner sheath and a weather-resistant outer sheath 6 of polyethylene surrounding the non-metallic reinforcing layer.

The preferred communication drop cable shown in Figure 2 is of substantially 8-shaped transverse cross-section with one lobe of the cable constituted by a communication cable comprising a single optical fibre 11 encapsulated in aramid yarns 12 and, surrounding the encapsulated optical fibre, a composite sheath 13 consisting of a low-smoke-and-fume flame-retardant inner sheath 14 of ethylene vinyl acetate, a layer 15 of longitudinally extending, transversely folded paper tape surrounding the inner sheath and a weather-resistant outer sheath 16 of polyethylene overlying the layer of paper tape. Two rip cords 17 are encapsulated at diametrically opposed positions in the radially inner part of the weather-resistant outer sheath 16. The other lobe of the 8-shaped communication drop cable comprises a flexible elongate member 18 of non-metallic reinforcing material enclosed within a weather-resistant sheath 19 of polyethylene which is integral with the polyethylene of the weather-resistant outer sheath 16 of the communication cable via a web 20.

In each case, when the communication cable is to pass from the outside to the inside of a building through a hole in a wall of the building, the weather-resistant sheath 6, 16 of that part of the communication cable to be housed in the building can be readily removed from the flame-retardant inner sheath 4, 14 without any detrimental effect thereon.

## Claims

1. A communication cable which is suitable for use in installations in which it may be subjected to extremes of weather conditions and which can be readily modified for use in domestic, commercial or industrial buildings, which communication cable comprises at least one conductor (1,11) for carrying communication signals and, surrounding the conductor or conductors, a composite overall sheath (3,13), characterised in that the composite overall sheath comprises an inner sheath (4,14) of a flame-retardant material and an outer sheath (6,16) of a weather-resistant material, the outer sheath being readily removable from the inner sheath without any detrimental effect thereon.

2. A communication cable as claimed in Claim 1, characterised in that the flame-retardant arterial of the inner sheath (4,14) and the weather-resistant material of the outer sheath (6,16) are such that there is substantially no bond between the inner and outer sheaths.

3. A communication cable as claimed in Claim 2, characterised in that the inner sheath (4, 14) is made of polyvinyl chloride and the outer sheath (6,16) is made of polyethylene.

4. A communication cable as claimed in Claim 1 or 2, characterised in that the inner sheath (14) and outer sheath (16) of the composite overall sheath (13) are separated by a layer (15) of bond-resistant material which will not readily bond to the flame-retardant material of the inner sheath, or to the flame-retardant material of the inner sheath and to the weather-resistant arterial of the outer sheath.

5. A communication cable as claimed in Claim 4, characterised in that the layer (15) of bond-resistant material is a coating of chalk or is a layer of tape of paper or of oriented polyester.

6. A communication cable as claimed in any one of Claims 1, 2, 4 and 5, characterised in that the flame-retardant material of the inner sheath (4,14) is a low-smoke-and-fume flame-retardant material.

7. A communication cable as claimed in Claim 6, characterised in that the low-smoke-and-fume flame-retardant material of the inner sheath (4,14) is ethylene vinyl acetate or a polyester thermoplastics elastomer.

8. A communication cable as claimed in any one of the preceding Claims, characterised in that a separately formed layer of metallic or non-metallic elongate elements of reinforcing material is sandwiched between the inner and outer sheaths, or between said layer of bond-resistant material and the outer sheath, and is readily removable from the inner sheath, or from said layer of bond-resistant material, after the outer sheath has been removed, without any detrimental effect on the inner sheath.

9. A communication cable as claimed in any one of the preceding Claims, characterised in that the communication cable constitutes one lobe of a drop cable of substantially 8-shaped transverse cross-section and in that the other lobe of the drop cable comprises a flexible elongate member (18) of metallic or non-metallic reinforcing material enclosed within a sheath (19) of weather-resistant material integral with the weather-resistant material of the outer sheath (16) of the communication cable.

10. A communication cable installation, characterised in that a communication cable as claimed in any one of the preceding Claims extends to the exterior of a wall of a building, passes through a hole in said wall into the interior of the building, and effects a substantially fluid-tight seal with the boundary wall of said hole, the outer sheath (6,16) of the communication cable having been removed from that part of the communication cable extending within the building.
